# EUROPÄISCHE PATENTSCHRIFT

(11) **EP 1 682 381 B1**
(45) Veröffentlichungstag und Bekanntmachung des Hinweises auf die Patenterteilung: **16.01.2008**
(21) Anmeldenummer: 04766794.4
(22) Anmeldetag: 15.09.2004
(51) Int. Cl.: B60N 2/44, B60Q 9/00, G08G 1/16, B60R 1/00, B60R 21/00, B62D 15/02

(54) **SPURHALTESYSTEM FÜR EIN KRAFTFAHRZEUG UND BETRIEBSVERFAHREN**
LANE GUIDANCE SYSTEM FOR A MOTOR VEHICLE AND OPERATING METHOD
SYSTEME DE STABILITE DE TRAJECTOIRE POUR UN VEHICULE AUTOMOBILE ET SON PROCEDE DE FONCTIONNEMENT

(30) Priorität: 30.10.2003 DE 10350779
(43) Veröffentlichungstag der Anmeldung: 26.07.2006
(73) Patentinhaber: ROBERT BOSCH GMBH, 70442 Stuttgart (DE)
(72) Erfinder: LEICHT, Holger, 71296 Heimsheim (DE)
(86) Internationale Anmeldenummer: PCT/EP2004/052177
(87) Internationale Veröffentlichungsnummer: WO 2005/042300

(56) Entgegenhaltungen:
- DE-A- 10 042 375
- FR-A- 2 828 154
- US-A- 5 835 028
- PATENT ABSTRACTS OF JAPAN Bd. 2000, Nr. 11, 3. Januar 2001 (2001-01-03) & JP 2000 225877 A (MAZDA MOTOR CORP), 15. August 2000 (2000-08-15)
- PATENT ABSTRACTS OF JAPAN Bd. 2000, Nr. 24, 11. Mai 2001 (2001-05-11) & JP 2001 199296 A (MATSUSHITA ELECTRIC IND CO LTD), 24. Juli 2001 (2001-07-24)

## Beschreibung

### Stand der Technik

Die Erfindung betrifft ein Spurhaltesystem für ein Kraftfahrzeug mit einer am Kraftfahrzeug angebrachten Umfeldsensoreinrichtung zum Erfassen der Fahrspur des Fahrzeugs, und einer Warneinrichtung zum Warnen des Fahrzeuglenkers im Fall, dass das Fahrzeug die Fahrspur zu verlassen droht. Die Erfindung betrifft auch ein Verfahren zum Betrieb eines solchen Spurhaltesystems.

Bei einem Spurhaltesystem der genannten Art wird die Fahrspur, die vor dem Fahrzeug bzw. darunter liegt, durch eine Umfeldsensorik erfasst. Droht das Fahrzeug, die Fahrspur nach rechts oder links zu verlassen, so wird eine akustische, eine optische und/oder eine haptische Warnung an den Fahrzeuglenker ausgeben.

Eine andere Einsatzmöglichkeit eines Spurhaltesystems der genannten Art ergibt sich bei der Fahrt auf einer mehrspurigen Autobahn, wenn der Fahrzeuglenker etwa die rechte Spur verlassen und auf die mittlere oder linke Spur wechseln will, um ein vorausfahrendes langsameres Fahrzeug zu überholen. Wird dann beim Beginn des Lenkvorgangs durch die Umfeldsensorik ein sich von hinten schnell näherndes Fahrzeug erkannt, so wird der Fahrzeuglenker durch eine akustische, optische und/oder haptische Warnung veranlasst, den Spurwechselvorgang abzubrechen.

Das Spurhaltesystem weist dazu typischerweise eine Sensorelementanordnung auf, die aus einem zweidimensionalen Sensorelementarray oder auch nur einer oder einigen wenigen Sensorelementzeilen besteht. Die Sensorelementanordnung ist in der Regel im Frontbereich des jeweiligen Fahrzeugs nach vorne weisend angebracht und tastet einen gewissen Fahrbahnbereich in der Umgebung des Fahrzeugs ab. Die gewonnenen Bildinformationen werden mit bekannten Techniken analog oder digital weiterverarbeitet, um Informationen über den Verlauf der Fahrbahnmarkierungen oder des Fahrbahnrandes zu extrahieren. Eine Warneinrichtung gibt im Fall, dass das Fahrzeug die momentane Fahrspur unter Gefahr zu verlassen droht, eine akustische, optische und/oder haptische Warnung aus.

Eine akustische Warnung kann beispielsweise in Form eines so genannten Nagelbandrattergeräusches seitenspezifisch auf derjenigen Fahrzeugseite abgegeben werden, auf der das Fahrzeug die Fahrspur zu verlassen droht. Durch ein solches Nagelbandrattergeräusch wird akustisch das Überfahren einer mit Nägeln oder einem Profil versehenen Fahrbahnmarkierung nachgebildet. Als Reaktion auf dieses Geräusch kann der Fahrer intuitiv meist sehr rasch eine geeignete Lenkkorrektur vornehmen. Nachteilig an einer solchen akustischen Warnung ist allerdings, dass die anderen Fahrzeuginsassen dadurch oft stark gestört und verunsichert werden.

Eine Störung der anderen Fahrzeuginsassen wird bei einer haptischen Warnung, etwa einer Vibration des Lenkrads zwar vermieden. Allerdings ist eine solche Vibrationswarnung nicht richtungsspezifisch, so dass der Fahrer intuitiv keine gerichtete Lenkkorrektur vornehmen kann. Vielmehr muss der Fahrer, durch die Warnung aufgeschreckt, zunächst die momentane Situation optisch erfassen und dann eine angemessene Reaktion einleiten. Dadurch gehen gerade in kritischen Verkehrssituationen oft wertvolle Sekundenbruchteile verloren.

Die FR-A 2828154 zeigt ein Spurhaltesystem, bei welchem bei Verlassen der Fahrspur zur Warnung des Fahrers eine spürbare Vibration im Fahrersitz auf der Seite der Sitzfläche erzeugt wird, zu der das Überschreiten stattfindet, gemäß dem Oberbegriff der Ansprüche 1 oder 7.

Entsprechendes gilt auch für die DE 10042375 A, die US-A 5835038, die JP 2000 225877 A und die JP 2001 199296 A. Alle diese Entgegenhaltungen zeigen Warnsignale für einen Fahrer durch Vibrationen im Sitz.

### Vorteile der Erfindung

Charakteristischerweise ist die Warneinrichtung so ausgelegt und eingerichtet, dass sie dem Fahrzeuglenker eine haptische Richtungsindikation gibt, also eine Information über die Richtung enthält, in der die gefahrvolle Fahrspurüberschreitung droht. Dadurch kann einerseits eine Störung der anderen Fahrzeuginsassen durch akustische Signale vermieden werden, zugleich wird aber die Richtungsinformation in dem Warnsignal erhalten. Der Fahrzeuglenker kann somit, jedenfalls nach einer kurzen Eingewöhnungsphase, intuitiv dem gefahrvollen Spurwechsel gegenlenken.

Vorteilhaft ist, dass die Warneinrichtung eine mit dem Fahrersitz zusammenwirkende Vibrationseinrichtung aufweist, zum Erzeugen einer haptischen Rückmeldung für den Fahrzeuglenker durch Vibration des Fahrersitzes, wobei die Vibrationseinrichtung derart ausgestaltet ist, dass auf wenigstens zwei Seiten der Sitzfläche des Sitzes unabhängig voneinander Vibrationen erzeugt werden können.

Vorteilhaft ist neben der Vibrationseinrichtung eine Sekundärwarnvorrichtung zur Ausgabe eines optischen und/oder akustischen Warnsignals vorgesehen. Dann kann im Fall, dass die haptische Warnung ignoriert wird oder erfolglos bleibt, ein weiteres anders geartetes Warnsignal abgegeben werden. Störungen der Mitfahrer werden damit auf ein für die Sicherheit der Fahrzeuginsassen unvermeidbares Maß reduziert.

Dabei kann die mit dem Fahrersitz zusammenwirkende Vibrationseinrichtung mit Vorteil durch wenigstens zwei Vibrationselemente bestehen, die auf der linke und rechten Seite des Sitzes angebracht sind und die getrennt angesteuert werden können. Diese sind dabei fest im Sitz integriert. In einer anderen Ausführung ist eine Vibrationsmatte vorgesehen, die so verändert wird, dass die Vibrationselemente rechts und links getrennt ansteuerbar sind.

Die Umfeldsensoreinrichtung des Kraftfahrzeugs kann mit Vorteil eine mit der Warneinrichtung zusammenwirkende Sensoreinrichtung zum Erfassen von sich rückwärtig nähernden Fahrzeugen aufweisen, zur Ausgabe einer Warnung, falls sich bei einem Wechsel auf eine neue Fahrspur sich auf der neuen Fahrspur von hinten ein Fahrzeug schnell nähert.

Insbesondere enthält die Umfeldsensoreinrichtung des Kraftfahrzeugs zweckmäßig einen Radarsensor, einen Ultraschallsensor oder eine Bildaufnahmekamera.

Bei einem Verfahren zum Betrieb eines derartigen Spurhaltesystems für ein Kraftfahrzeug wird erfindungsgemäß die Fahrspur des Fahrzeugs erfasst, wird beurteilt, ob das Fahrzeug die Fahrspur unter Gefahr zu verlassen droht und wird ein Warnsignal für den Fahrzeuglenker erzeugt, wenn das Fahrzeug die Fahrspur unter Gefahr zu verlassen droht, wobei charakteristischerweise das Warnsignal dem Fahrzeuglenker eine akustische oder haptische Rückmeldung gibt, die eine Information über die Richtung enthält, in der die gefahrvolle Fahrspurüberschreitung droht.

Weitere Vorteile ergeben sich aus der Beschreibung von Ausführungsbeispielen und aus den abhängigen Ansprüchen.

### Zeichnung

Die Erfindung wird nachfolgend anhand der in der Zeichnung dargestellten Ausführungsbeispielen näher erläutert. Es zeigen
Fig. 1 eine schematische Darstellung eines Kraftfahrzeugs mit einem Spurhaltesystem nach einem Ausführungsbeispiel der Erfindung auf einer zweispurigen Autobahn;
Fig. 2 eine schematische Darstellung eines Spurhaltesystems nach einem anderen Ausführungsbeispiel der Erfindung, bei dem Vibrationen des Fahrersitzes die Richtung einer gefahrvollen Fahrspurüberschreitung angeben;

### Beschreibung von Ausführungsbeispielen

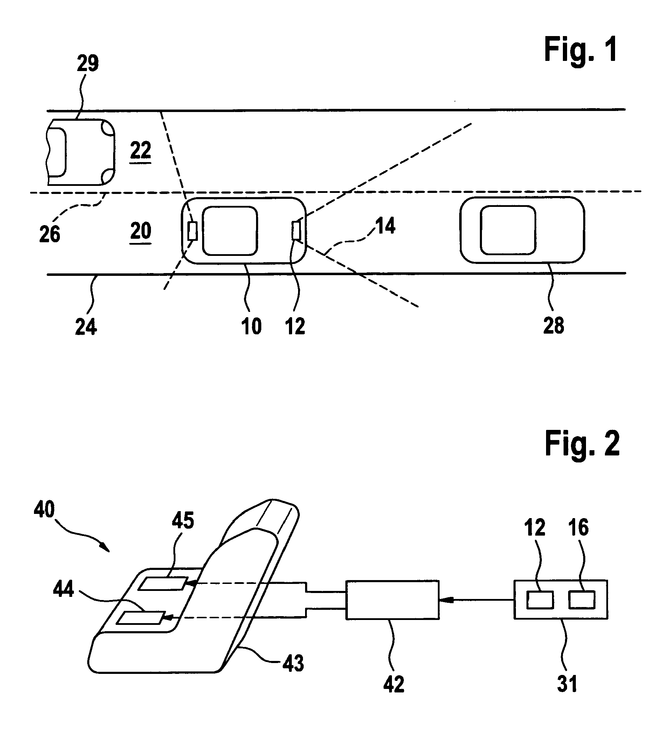

Figur 1 illustriert ein Spurhaltesystem nach einem Ausführungsbeispiel der Erfindung mit einer schematischen Darstellung eines Kraftfahrzeugs 10 auf einer zweispurigen Autobahn 20, 22. Das Spurhaltesystem umfasst eine Umfeldsensorik 31 (Fig. 2), die im Ausführungsbeispiel einen im vorderen Fahrzeugabschnitt angebrachten und nach vorne weisenden vorderen Sensor 12 und einen im hinteren Fahrzeugabschnitt angebrachten und nach hinten weisenden rückwärtigen Sensor 16 enthält.

Das Gesichtsfeld 14 des vorderen Sensors 12 erfasst die rechte Fahrbahnbegrenzung 24 der rechten Fahrspur 20 und die die Fahrspuren 20 und 22 trennende Fahrbahnmarkierung 26. Eine Recheneinheit des Spurhaltesystems, beispielsweise ein Mikroprozessor, bestimmt aus den erfassten Sensordaten die Position des Fahrzeugs 10 relativ zur Fahrspur 20.

Das Gesichtsfeld 18 des hinteren Sensors 16 deckte den rückwärtigen Bereich des Fahrzeugs 10 ab, um von hinten herankommende Fahrzeuge 29 zu erfassen.

Droht das Fahrzeug 10, etwa aufgrund einer Ablenkung oder der Übermüdung des Fahrers, die Fahrbahnbegrenzung 24 zu überschreiten und die Fahrspur 20 nach rechts zu verlassen, so wird der Fahrer durch die weiter unten beschriebene Warnung gewarnt und in die Lage versetzt, Gegenmaßnahmen einzuleiten. Letztere könnten in einer Ausführung auch durch einen automatischen Eingriff in die Lenkung des Fahrzeugs bestehen. Die Warnung wird dadurch relaisiert, dass ein Warnsignal erzeugt wird und eine Vibrationseinheit, die die Warnsignale empfängt, seitenrichtig Ansteuersignale erzeugt für das oder die entsprechenden Elemente im Fahrersitz. Dadurch wird der Fahrer veranlasst, wieder nach rechts zu lenken und den Spurwechselvorgang abzubrechen. Auch hier kann ergänzend ein akustisches und/oder optisches Warnsignal ausgegeben werden..

Ein akustisches Warnsignal kann auch ausgegeben werden, wenn der Fahrer auf den haptischen Warnhinweis hin nicht reagiert und weiter eine Fahrspurüberschreitung droht oder erfolgt. Dadurch, dass im Ausführungsbeispiel die akustische Warnung nur dann abgegeben wird, wenn der haptische Warnhinweis nicht aufgenommen wurde oder bestimmte andere Voraussetzungen erfüllt sind (z.B. Hände nicht am Lenkrad o.ä), werden Störungen der Mitfahrer auf ein für die Sicherheit der Fahrzeuginsassen unvermeidbares Maß reduziert.

Durch den rückwärtigen Sensor 16, der in einer vorteilhaften Ausführung auch fehlen kann, kann das Spurhaltesystem 30 auch als Hilfsvorrichtung für Spurwechsel eingesetzt werden, wenn etwa der Fahrer des Fahrzeugs 10 die rechte Fahrspur 20 verlassen und auf die linke Fahrspur 22 wechseln will, um ein vorausfahrendes langsameres Fahrzeug 28 zu überholen. Wird beim Beginn des Lenkvorgangs durch den rückwärtigen Sensor 16 ein auf der Fahrspur 22 schnell von hinten herankommendes Fahrzeug 29 erfasst, so werden Warnsignale und an die Vibrationseinrichtung ausgegeben, die dann seitenrichtig Ansteuersignale erzeugt für das oder die entsprechenden Elemente im Fahrersitz. Dadurch wird der Fahrer veranlasst, wieder nach rechts zu lenken und den Spurwechselvorgang abzubrechen. Auch hier kann ergänzend ein akustisches Warnsignal ausgegeben werden.

Diese Vorgehensweise ist in Figur 2 verdeutlicht. Die Umfeldsensorik 31 bzw. eine die Signale dieser Sensorik auswertende Verarbeitungseinheit ermitteln, dass und auf welcher Fahrzeugseite ein Überschreiten der Spur droht. Es wird ein entsprechendes Signal erzeugt und an eine Warneinheit 42, die Teil der Verarbeitungseinheit sein kann, ausgegeben. Im Fahrersitz sind Vibrationselemente 44 und 45 verbaut, die getrennt von der Warneinheit 42 ansteuerbar sind. Abhängig von dem zugeführten Signal steuert die Warneinheit 42 das rechte (im Falle eines Spurverlassens nach rechts) oder das linke (im Falle eines Spurverlassens nach links) Vibrationselement an, welches ein Vibrationsbewegung erzeugt und somit den Fahrer seitenrichtig zur erforderlichen Lenkkorrektur auffordert. Die Vibrationselemente sind im Sitz integriert und derart angeordnet, dass eine spürbare Vibration auf einem Teil der Sitzfläche entsteht (auf dem linken Teil bei dem linken, auf dem rechten Teil bei dem rechten Vibrationselement). In einer anderen Ausführung wird eine Vibrationsmatte im Fahrersitz unter der Sitzfläche eingesetzt, die derart ausgestaltet ist, dass ihre linke und rechte Seite getrennt ansteuerbar ist.

Während die Erfindung insbesondere mit Bezug auf bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Beispielsweise kann die Umfeldsensorik 31 in einer einfacheren und preiswerteren Ausgestaltung nur einen Sensor 12 enthalten.

## Patentansprüche

1. Spurhaltesystem für ein Kraftfahrzeug mit einer am Kraftfahrzeug (10) angebrachten Umfeldsensoreinrichtung (31) zum Erfassen der Fahrspur (20) des Fahrzeugs, einer Einrichtung (42) zum Warnen des Fahrers im Fall, dass das Fahrzeug (10) die Fahrspur (20) zu verlassen droht bzw. verlässt, die derart ausgebildet ist, dass eine für den Fahrer spürbare Vibration im Fahrersitz auf der Seite der Sitzfläche erzeugt wird, zu der das Verlassen der Spur droht bzw. erfolgt, **dadurch gekennzeichnet, dass** die Einrichtung ferner derart ausgebildet ist, dass ein akustisches Warnsignal und/oder ein optisches Warnsignal ausgegeben wird, wenn der Fahrer auf die Vibration im Fahrersitz nicht reagiert und weiter eine Fahrspurüberschreitung droht oder erfolgt.

2. Spurhaltesystem nach Anspruch 1, **dadurch gekennzeichnet, dass** die Einrichtung (42) Ansteuersignale für eine Vibrationseinrichtung ausgibt, die eine Vibration im Fahrersitz auf der Seite der Sitzfläche bewirken, zu der das Verlassen der Spur droht bzw. erfolgt.

3. Spurhaltesystem nach einem der vorhergehenden Ansprüche, **dadurch gekennzeichnet, dass** die Vibration durch eine Vibrationseinrichtung erzielt wird, die für die linke und der rechten Seite der Sitzfläche des Fahrersitzes getrennt ansteuerbar ist.

4. Spurhaltesystem nach Anspruch 2, **dadurch gekennzeichnet, dass** die Vibrationseinrichtung in den Fahrersitz eingebaut ist derart, dass eine Vibration auf der Sitzfläche des Sitzes spürbar ist.

5. Spurhaltesystem nach einem der vorhergehenden Ansprüche, **dadurch gekennzeichnet, dass** neben der Vibrationseinrichtung (37) eine Sekundärwarnvorrichtung (36) zur Ausgabe eines optischen und/oder akustischen Warnsignals vorgesehen ist

6. Spurhaltesystem nach einem der vorhergehenden Anspruch, **dadurch gekennzeichnet, dass** die Umfeldsensoreinrichtung (31) des Kraftfahrzeugs (10) eine mit der Warneinrichtung zusammenwirkende Sensoreinrichtung (16) zum Erfassen von sich rückwärtig nähernden Fahrzeugen aufweist, zur Ausgabe einer Warnung, falls sich bei einem Wechsel auf eine neue Fahrspur (22) auf der neuen Fahrspur (22) von hinten ein Fahrzeug (29) schnell nähert.

7. Verfahren zum Betrieb eines Spurhaltesystems für ein Kraftfahrzeug (10), bei dem die Fahrspur (20) des Kraftfahrzeugs erfasst wird, bei welchem beurteilt wird, ob das Fahrzeug (10) die Fahrspur (20) unter Gefahr zu verlassen droht oder verlässt und eine Warnung für den Fahrer erzeugt wird, wenn das Fahrzeug die Fahrspur zu verlassen droht bzw. verlässt, wobei zur Warnung eine für den Fahrer spürbare Vibration im Fahrersitz erzeugt wird, **dadurch gekennzeichnet, dass** ein akustisches und/oder optisches Warnsignal ausgegeben wird, wenn der Fahrer auf die Vibration im Fahrersitz hin nicht reagiert und weiter eine Fahrspurüberschreitung droht oder erfolgt.

## Claims

1. Lane holding system for a motor vehicle having a surroundings sensor device (31) which is mounted on the motor vehicle (10) and has the purpose of sensing the lane (20) of the vehicle, a device (42) for warning the driver if the vehicle (10) threatens to leave the lane (20), or is leaving it, which is embodied in such a way that a vibration in the driver's seat which can be felt by the driver is generated on the side of the seat surface at which the vehicle threatens to leave the lane, or is leaving it, **characterized in that** the device is also embodied in such a way that an audible warning signal and/or a visual warning signal is output if the driver does not react to the vibration in the driver's seat and the vehicle continues to threaten to leave the lane, or continues to leave it.

2. Lane holding system according to Claim 1, **characterized in that** the device (42) outputs actuation signals for a vibration device, which actuation signals bring about a vibration in the driver's seat on the side of the seat surface at which the vehicle threatens to leave the lane, or is leaving it.

3. Lane holding system according to one of the preceding claims, **characterized in that** the vibration is produced by a vibration device which can be actuated separately for the left hand and right hand sides of the seat surface of the driver's seat.

4. Lane holding system according to Claim 2, **characterized in that** the vibration device is installed in the driver's seat in such a way that a vibration on the seat surface of the seat can be felt.

5. Lane holding system according to one of the preceding claims, **characterized in that** in addition to the vibration device (37) a secondary warning device (36) for outputting a visual and/or audible warning signal is provided.

6. Lane holding system according to one of the preceding claims, **characterized in that** the surroundings sensor device (31) of the motor vehicle (10) has a sensor device (16) which interacts with the warning device and has the purpose of sensing vehicles which are approaching at the rear, in order to output a warning if, when the vehicle changes to a new lane (22), a vehicle (29) approaches quickly from behind on the new lane (22).

7. Method for operating a lane holding system for a motor vehicle (10), in which the lane (20) of the motor vehicle is sensed, in which it is assessed whether the vehicle (10) dangerously threatens to leave the lane (20) or is leaving it and a warning is generated for the driver if the vehicle threatens to leave the lane or is leaving it, wherein, in order to provide a warning, a vibration in the driver's seat which can be felt by the driver is generated, **characterized in that** an audible and/or visual warning signal is output if the driver does not react to the vibration in the driver's seat and the vehicle continues to threaten to leave the lane, or continues to leave it.

## Revendications

1. Système de stabilisation de trajectoire de véhicule automobile comportant une installation de détection champ environnant (31) prévue sur le véhicule (10) pour saisir la trajectoire (20) du véhicule, une installation (42) pour signaler au conducteur que le véhicule (10) quitte ou risque de quitter la trajectoire (20), cette installation étant réalisée pour générer des vibrations du siège du conducteur coté surface d'assise, perceptibles par le conducteur indiquant que le véhicule quitte ou risque de quitter la trajectoire,
**caractérisé en ce que**
l'installation est en outre conçue pour générer un signal d'avertissement acoustique et/ou un signal d'avertissement optique si le conducteur ne réagit pas aux vibrations du siège et si un risque de sortie de trajectoire subsiste ou se réalise.

2. Système de stabilisation de trajectoire selon la revendication 1,
**caractérisé en ce que**
l'installation (42) émet des signaux de commande pour le générateur de vibrations qui produit des vibrations dans le siège du conducteur au niveau de la surface d'assise indiquant que le véhicule quitte ou risque de quitter la trajectoire.

3. Système de stabilisation de trajectoire selon l'une des revendications précédentes,
**caractérisé en ce qu'**
on génère les vibrations par un générateur de vibrations commandé différemment pour la surface d'assise coté gauche ou coté droit du siège du conducteur.

4. Système de stabilisation de trajectoire selon la revendication 2,
**caractérisé en ce que**
le générateur de vibrations est installé dans le siège du conducteur pour que les vibrations soient perceptibles au niveau de la surface d'assise du siège.

5. Système de stabilisation de trajectoire selon l'une des revendications précédentes
**caractérisé en ce qu'**
en plus du générateur de vibrations (37) il est prévu un dispositif d'avertissement secondaire (36) émettant un signal d'avertissement optique et/ ou acoustique.

6. Système de stabilisation de trajectoire selon l'une des revendications précédentes,
**caractérisé en ce que**
l'installation de détection de l'environnement (31) du véhicule (10) comprend une installation de détecteur (16), coopérant avec l'installation de signalisation pour détecter des véhicules qui se rapprochent de l'arrière, et émettre un signal d'avertissement si en cas de changement vers une nouvelle trajectoire (32), un véhicule se rapproche rapidement de l'arrière du véhicule (29) sur la nouvelle trajectoire (22).

7. Procédé de gestion d'un système de maintien de trajectoire d'un véhicule automobile (10) selon lequel on saisit la trajectoire (20) du véhicule, on juge si le véhicule (10) quitte ou risque de quitter la trajectoire (20) et on génère un signal d'avertissement pour le conducteur si le véhicule risque de quitter sa trajectoire ou quitte sa trajectoire, et pour générer le signal d'avertissement, on génère des vibrations dans le siège du conducteur, vibrations perceptibles par le conducteur,
**caractérisé en ce qu'**
on émet un signal d'avertissement acoustique et/ou optique si, le conducteur ne réagit pas aux vibrations induites dans le siège du conducteur et si le risque de dépassement de trajectoire ou le dépassement continue.
